# EUROPÄISCHE PATENTSCHRIFT

(11) **EP 1 574 529 B1**
(45) Veröffentlichungstag und Bekanntmachung des Hinweises auf die Patenterteilung: **17.12.2008**
(21) Anmeldenummer: 04025259.5
(22) Anmeldetag: 23.10.2004
(51) Int. Cl.: C08F 10/00, C08F 4/622

(54) **Verfahren zur Darstellung von Polyethylen und Katalysatorvorstufe**
Process for the preparation of polyethylene and a catalyst precursor
Procédé pour la préparation de polyethylène et d'un précurseur de catalyseur

(30) Priorität: 12.03.2004 DE 102004012106
(43) Veröffentlichungstag der Anmeldung: 14.09.2005
(73) Patentinhaber: Forschungszentrum Karlsruhe GmbH, 76133 Karlsruhe (DE)
(72) Erfinder: Döring, Manfred, Prof. Dr., 76744 Wörth-Büchelberg (DE); Bluhm, Martin, Dr., 68723 Oftersheim (DE)
(74) Vertreter: Rückert, Friedrich

(56) Entgegenhaltungen:
- WO-A-20/04081020
- D.J.JONES, V.C. GIBSON, S.M.GREEN, P.J.MADDOX: "Discovery of anew family of chromium ethylene polymerization catalysts using high throughput screening methodology" CHEMICAL COMMUNICATION, Bd. 2002, 16. April 2002 (2002-04-16), - 16. April 2002 (2002-04-16) Seiten 1038-1039, XP002330206 CAMBRIDGE
- CAMERON ET AL: "Pendant arom Schiff base complexes of aluminum as ethylene polymerization catalyst" CHEMICAL COMMUNICATION, Bd. 1999, 1999, Seiten 1883-1884, XP002330207 CAMBRIDGE
- BLUHM M E ET AL: "Chromium imine and amine complexes as homogeneous catalysts for the trimerisation and polymerisation of ethylene" JOURNAL OF ORGANOMETALLIC CHEMISTRY, ELSEVIER-SEQUOIA S.A. LAUSANNE, CH, Bd. 690, Nr. 3, 28. Januar 2005 (2005-01-28), Seiten 713-721, XP004720238 ISSN: 0022-328X

## Beschreibung

Die Erfindung betrifft ein Verfahren zur Darstellung von 1-Hexen gemäß Anspruch 1 und eine Katalysatorvorstufe gemäß Anspruch 2.

In der Veröffentlichung "First Cr(III)-SNS Complexes and Their Use as Highly Efficient Catalysts for the Trimerisation of Ethylene to 1-Hexene" von David S. MCGuinness et al. in J. AM. CHEM. SOC: 2003, 125, 5272-5273 wird ein Katalysatorsystem für die Trimerisierung von Ethen zu 1-Hexen beschrieben, das aus einem Chrom(III)-Komplex mit dreizähnigen PNP-Liganden und einem Co-Katalysator besteht. Der Co-Katalysator ist Methylaluminoxan (MAO).

Die Herstellung dieses Co-Katalysators und seine Verwendung sind auch in "Novel Cr-PNP complexes as catalysts for the trimerisation of ethylene" von David S. McGuinness et al. in CHEM. COMMUN., 2003, 334-335 veröffentlicht.

Diese Katalysatorvorstufe katalysiert zusammen mit Methylaluminoxan die Reaktion von Ethen zu 1-Hexan wirkungsvoll und selektiv. Wegen der hohen Selektivität wird andererseits Polyethylen nur in sehr geringem Umfang gebildet.

Der Erfindung liegt die Aufgabe zugrunde, eine Katalysatorvorstufe und ein Herstellungsverfahren für Polyethylen vorzuschlagen, wobei die Darstellung von Polyethylen durch die Katalysatorvorstufe und Methylaluminoxan selektiv katalysiert wird, und wobei die Katalysatorvorstufe einfacher herzustellen ist. Insbesondere soll die Herstellung der Vorstufe auf möglichst wenig toxischen Ausgangsstoffen beruhen. Der Katalysator soll außerdem bei hoher Reaktivität eine lange Standzeit aufweisen.

Die Erfindung wird durch die Darstellung von Polyethylen gemäß dem ersten Patentanspruch und durch die Katalysatorvorstufe gemäß dem zweiten Patentanspruch gelöst.

Erfindungsgemäß wird für die Umsetzung von Ethen zu Polyethylen ein Katalysator mit der in Anspruch 1 dargestellten Strukturformel eingesetzt. Hierbei ist Y vorzugsweise entweder Phosphor oder Schwefel und Z eines der Elemente Stickstoff, Schwefel, Phosphor oder Sauerstoff.

Die jeweiligen Elemente für Y und Z können unabhängig voneinander gewählt werden. Die Reste R sind Alkyl- oder Arylreste sind. Unter Alkyl- oder Arylresten sind sowohl die unsubstituierten als auch substituierte Substituenten zu verstehen. Alkylreste können verzweigt oder unverzweigt sein und eine Kohlenstoffzahl von 1 bis 10 aufweisen. In gleicher Weise können Arylreste substituiert sein, beispielsweise durch unterschiedlich lange, verzweigte oder unverzweigte Alkylketten oder durch Cycloalkyle wie z. B. Cyclohexyl. Alkylketten können auch ungesättigte Kohlenstoff-Kohlenstoff-Bindungen aufweisen.

Die Herstellung der Katalysatorvorstufe kann über die folgende Reaktion erfolgen:

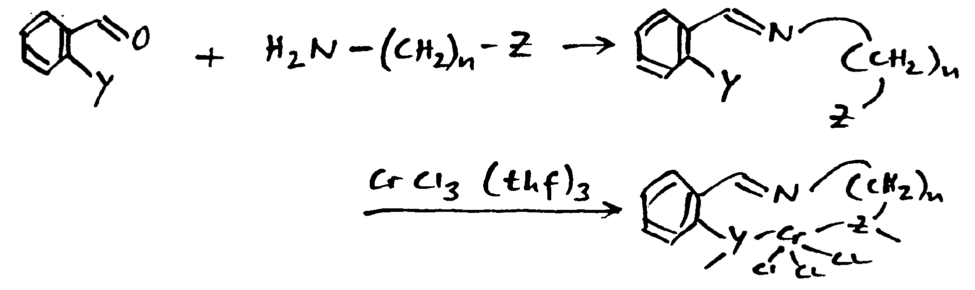

Auf diese Weise ist die Katalysatorvorstufe einfacher darstellbar als die bekannten Katalysatorvorstufen.

Die Erfindung wird im folgenden anhand von Versuchsbeispielen näher erläutert.

### Darstellung der Imin-Liganden:

Unter Argon werden 3 mmol des Aldehyds in 40 mL abs. CH₂Cl₂ vorgelegt. Dazu werden zügig 3 mmol des Amins unter Rühren zugegeben. Die Reaktionsmischung wird 4 Stunden bei Raumtemperatur gerührt und anschließend das Lösungsmittel im Vakuum entfernt. Der ölige Rückstand wird aus Hexan in der Kälte kristallisiert und man erhält das Imin als farblosen bis gelben Feststoff in 40-80 % Ausbeute.

### Darstellung der Katalysatorvorstufe (Chrom (III) -Komplexe) :

5 mmol CrCl₃(thf)₃ werden in 20 mL THF gelöst. Eine Lösung von 5 mmol des Imin- oder Aminliganden in 10 mL abs. THF werden zügig unter Rühren zu der roten Chromchloridlösung zugegeben. Man rührt 12 Stunden bei Raumtemperatur. Das Lösungsmittel wird im Vakuum entfernt und man erhält einen pulvrigen Rückstand des Chromkomplexes. Die Ausbeuten betragen 80-95 %.

### Durchführung der Katalyseversuche bei 30 bar Ethenüberdruck:

In einem Schlenkkolben werden 10 mmol der Chrom(III)-Komplexverbindung als Präkatalysator in 30 mL Toluol suspendiert. Ein 150 mL Stahlautoklav wird evakuiert und mehrmals mit Argon gespült. Die Lösung mit dem Präkatalysator wird dann unter Argon in das Reaktionsgefäß gegeben. Unter Rühren werden 0.6 mL MAO (Methylaluminoxan) zugegeben. Das Autoklavengefäß wird verschlossen und mit 30 bar Ethen befüllt. Der Druck wird über die Dauer der Reaktion durch manuelle Zuführung von Ethen konstant gehalten. Zum Abbruch der Reaktion wird vorsichtig belüftet und die Reaktionslösung mit verdünnter Salzsäure und Wasser versetzt. Danach erfolgt die quantitative GC-Analyse der organischen Phase.

### Durchführung der Katalyseversuche bei 3 bar Ethenüberdruck:

Gleiche Durchführung wie bei den oben beschriebenen Versuchen. Nach Verschließen des Reaktors wird das Gefäß mit 3 bar Ethen befüllt.

In der Tabelle sind die Ergebnisse der Darstellung von Polyethylen unter Verwendung der Katalysatorvorstufen 1 und 2 sowie MAO zusammengefasst. Dabei bedeuten:
n_{Kat} : Stoffmenge an eingesetzter Katalysatorvorstufe
t: Reaktionszeit in Stunden
p: Reaktionsdruck in Bar
T: Temperatur in °C
Umsatz: Gesamtumsatz gebildeten Hexens
TOF: "Turn over frequency": Umsatzrate pro Zeiteinheit
PE: die Ausbeute an Polyethylen in Gewichtsprozent
Hexen: die Ausbeute an Hexen in Gewichtsprozent

| | Präkatalysator Menge (µmol)*^{a}* | Ethenüberdruck (bar) | Lauf-Zeit (h) | Ausbeute (mg) | Hexen (wt %) | Poly-Ethylen (wt %) | Produktivität (h⁻¹) |
|---|---|---|---|---|---|---|---|
| 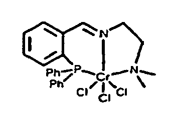 | 10 | 30 | 2 | 185 | - | 100 | 660 |
| 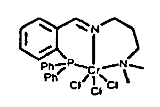 | 10 | 3 | 1 | 250 | - | 100 | 250 |
| 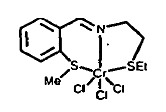 | 10 | 30 | 1 | 2320 | - | 100 | 8280 |
| 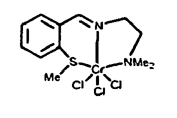 | 10 | 30 | 1 | 920 | 2 | 98 | 3283 |
| 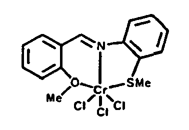 | 10 | 30 | 1 | 282 | - | 100 | 867 |
| 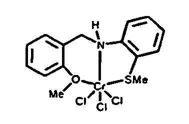 | 10 | 30 | 1 | 1112 | - | 100 | 3858 |

| | | | | | | | |
|---|---|---|---|---|---|---|---|
| *^{a}* 100 eq. MAO als Cokatalysator; Reaktionstemperatur zwischen 22 - 31 °C. | | | | | | | |

## Patentansprüche

1. Verfahren zur Darstellung von Polyethylen, bei dem
- Ethen
- in Gegenwart einer Katalysatorvorstufe, bei der Chrom mit einem Liganden, der Phosphor und/oder Stickstoff enthält, komplexiert ist, und
- in Gegenwart von Methylaluminiumoxan als Co-Katalysator
- zu Polyethylen umgesetzt wird,
**dadurch gekennzeichnet, dass** die Katalysatorvorstufe durch die folgende chemische Formel beschrieben wird 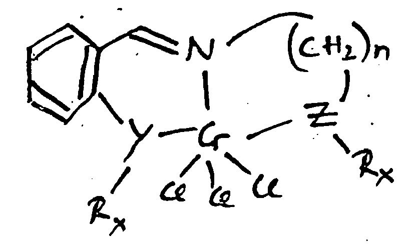 wobei Y und Z entweder Stickstoff oder Schwefel oder Phosphor oder Sauerstoff darstellen und R entweder Aryl-, Phenyl- oder Alkylreste sind und x je nach der chemischen Wertigkeit von Y oder Z entweder 1 oder 2 ist und n die Werte 2 oder 3 annimmt.

2. Katalysatorvorstufe zur Katalyse der Darstellung von Polyethylen aus Ethen
mit der folgenden chemischen Formel: 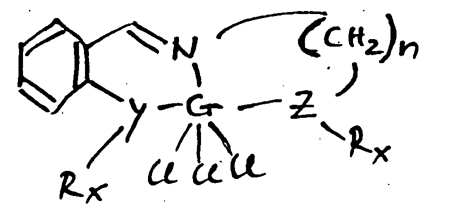 wobei Y und Z entweder Stickstoff oder Schwefel oder Phosphor oder Sauerstoff darstellen und R entweder Aryl-, Phenyl- oder Alkylreste sind und x je nach der chemischen Wertigkeit von Y oder Z entweder 1 oder 2 ist und n die Werte 2 oder 3 annimmt.

## Claims

1. Method of producing polyethylene, wherein
- ethane
- is converted into polyethylene
- in the presence of a catalyst preliminary stage, wherein the chromium forms complexes with a ligand, which contains phosphorus and/or nitrogen, and
- in the presence of methyl aluminium oxane as the cocatalyst,
**characterised in that** the catalyst preliminary stage is described by the following chemical formula 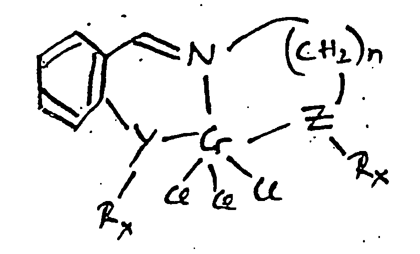 wherein Y and Z represent either nitrogen or sulphur or phosphorus or oxygen, and R are either aryl, phenyl or alkyl residues, and x is either 1 or 2 according to the chemical valence of Y or Z, and n assumes the values 2 or 3.

2. Catalyst preliminary stage for catalysing the production of polyethylene from ethene having the following chemical formula: 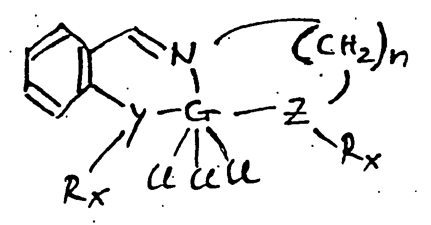 wherein Y and Z represent either nitrogen or sulphur or phosphorus or oxygen, and R are either aryl, phenyl or alkyl residues, and x is either 1 or 2 according to the chemical valence of Y or Z, and n assumes the values 2 or 3.

## Revendications

1. Procédé de préparation de polyéthylène, selon lequel
- de l'éthène est transformé en polyéthylène,
- en présence d'un précurseur de catalyseur, dans lequel le chrome est complexé avec un ligand, qui contient du phosphore et/ou de l'azote, et
- en présence de méthylaluminiumoxane comme co-catalyseur,
**caractérisé en ce que**
- le précurseur de catalyseur répond à la formule chimique suivante : 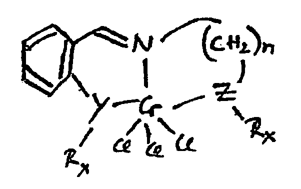
dans laquelle Y et Z représentent soit de l'azote, soit du soufre, soit du phosphore, soit de l'oxygène et R représente des radicaux aryle, phényle ou alkyle et x a pour valeur, suivant la valence chimique de Y ou Z, 1 ou 2 et n a pour valeur 2 ou 3.

2. Précurseur de catalyseur pour la catalyse de la préparation de polyéthylène à partir d'éthène,
répondant à la formule chimique suivante : 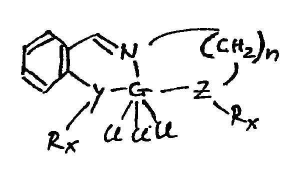 dans laquelle Y et Z représentent soit de l'azote, soit du soufre, soit du phosphore, soit de l'oxygène et R représente des radicaux aryle, phényle ou alkyle et x a pour valeur, suivant la valence chimique de Y ou Z, 1 ou 2 et n a pour valeur 2 ou 3.
